# EUROPÄISCHE PATENTSCHRIFT

(11) **EP 3 820 300 B1**
(45) Veröffentlichungstag und Bekanntmachung des Hinweises auf die Patenterteilung: **12.10.2022**
(21) Anmeldenummer: 19748715.0
(22) Anmeldetag: 11.07.2019
(51) Int. Cl.: A23J 1/00, A23J 3/04, A23K 10/20, A23L 29/275

(54) **VERFAHREN ZUR GEWINNUNG VON PRODUKTEN DER NAHRUNGS- UND/ODER FUTTERMITTELINDUSTRIE AUS INSEKTEN UND FESTSTOFFPHASE GEWONNEN AUS INSEKTEN**
METHOD FOR OBTAINING PRODUCTS FOR THE FOOD INDUSTRY AND/OR FEED INDUSTRY FROM INSECTS, AND SOLID PHASE OBTAINED FROM INSECTS
PROCÉDÉ D'OBTENTION DE PRODUITS DE L'INDUSTRIE ALIMENTAIRE HUMAINE ET/OU ANIMALE À PARTIR D'INSECTES ET PHASE SOLIDE PRODUITE À PARTIR D'INSECTES

(30) Priorität: 11.07.2018 DE 102018116769
(43) Veröffentlichungstag der Anmeldung: 19.05.2021
(73) Patentinhaber: GEA Mechanical Equipment GmbH, 59302 Oelde (DE)
(72) Erfinder: KIRCHNER, Stefan, 33334 Gütersloh (DE); SINDERMANN, Dirk, 59302 Oelde (DE); HEIDHUES, Jörg, 59505 Bad Sassendorf (DE)
(74) Vertreter: Specht, Peter
(86) Internationale Anmeldenummer: PCT/EP2019/068640
(87) Internationale Veröffentlichungsnummer: WO 2020/011903

(56) Entgegenhaltungen:
- WO-A1-2014/123420
- WO-A1-2015/070194
- WO-A1-2017/066880
- Khan: "Recent advances in rôle ofinsects as alternative protein source in poultry nutrition", Journal of Applied Animal Research, 14. Mai 2018 (2018-05-14), Seiten 1144-1157, XP055590547, Gefunden im Internet: URL:https://doLorg/10.1080/09712119.2018.1 474743 [gefunden am 2019-05-21]
- SANDRA G.F. BUKKENS: "The nutritional value of edible insects", ECOLOGY OF FOOD AND NUTRITION, Bd. 36, Nr. 2-4, 1. Januar 1997 (1997-01-01), Seiten 287-319, XP055484992,
- XUE ZHAO ET AL: "Yellow Mealworm Protein for Food Purposes - Extraction and Functional Properties", PLOS ONE, Bd. 11, Nr. 2, 3. Februar 2016 (2016-02-03), Seite e0147791, XP055627180, DOI: 10.1371/journal.pone.0147791

## Beschreibung

Die vorliegende Erfindung betrifft ein Verfahren zur Gewinnung von Produkten der Nahrungs- und/oder Futtermittelindustrie aus Insekten nach dem Oberbegriff des Anspruchs 1.

Die Fraktionierung der Pülpe aus Insektenlarven wird aktuell vereinzelt im industriellen Maßstab durchgeführt. Die wenigen Betriebe, die heutzutage produzieren, verwenden hierzu z.T. ein Verfahren unter Zugabe von Wasser. Alternativ werden auch Pressen eingesetzt, wodurch sich das Fett zusammen mit dem Wasser von den Feststoffen abpressen lässt. Werden Larven der Insekten zuvor getrocknet, lässt sich das Öl von den Feststoffen abpressen.

Im Gegensatz zum Einsatz von Pressen, lässt sich durch das wässrige Verfahren ein Feststoff erzielen, der einen hohen Proteingehalt und einen geringeren Restfettgehalt aufweist. Der Feststoff kann als Futtermittel oder zur Verwendung als Nahrungsmittel eingesetzt werden. Für die weitere Verarbeitung, Verpackung und Lagerung sind geringe Restfettwerte vorteilhaft.

Aus dem Bereich der Fraktionierung von Insekten ist die WO 2013/191548 A1 bekannt. Dieses Dokument beschreibt einen Prozess, welcher eine Zerkleinerung von Insekten und Würmern zu einer Pülpe, insbesondere auf eine Partikelgröße von 1 mm umfasst. Sodann erfolgt eine enzymatische Hydrolyse bei 35-65°C mit säurehaltiger Protease bei pH 3-6 oder einer neutralen Protease bei pH 6-8. Sodann erfolgt ein Aufheizen der Pülpe auf Temperaturen von 70-100°C und schließlich eine Separation in drei Phasen unter Ausbildung einer Ölfraktion, einer wässrigen Proteinfraktion und einer feststoffhaltigen Fraktion. Anschließend können die Fraktionen getrocknet werden.

Weiterhin ist eine Fraktionierung aus der WO 2014/123420 A1 bekannt. Dieses Dokument beschreibt die folgende Prozessabfolge. Eine Zerkleinerung der Insekten und/oder Würmer, insbesondere auch von Insektenlarven, zu einer Pülpe, wobei die Zerkleinerung auf eine mittlere Partikelgröße von kleiner als 1 mm erfolgt. Sodann erfolgt ein Aufheizen der Insektenpülpe auf 70-100°C. Schließlich umfasst das Verfahren eine Separation in drei Phasen, einer Ölfraktion, einer wässrigen Proteinfraktion und einer feststoffhaltigen Fraktion. Das Verfahren erfolgt enzymfrei und umfasst ein Trocknen einzelner Produkte. Ein Abtöten von Insekten oder Würmern wird in dieser Druckschrift nicht offenbart. Bei der Verarbeitung von Würmern und Insekten nach dem Verfahren, welches in dieser Druckschrift beschrieben wird, hat sich gezeigt, dass innerhalb von kürzester Zeit nach dem Zerkleinern eine Braunverfärbung der Insektenpülpe auftritt. Dieser Effekt wird nachfolgend auch als "Browning-Effekt" beschrieben. Dieser Effekt beeinflusst die Futterqualität und die Kundenakzeptanz des Produktes.

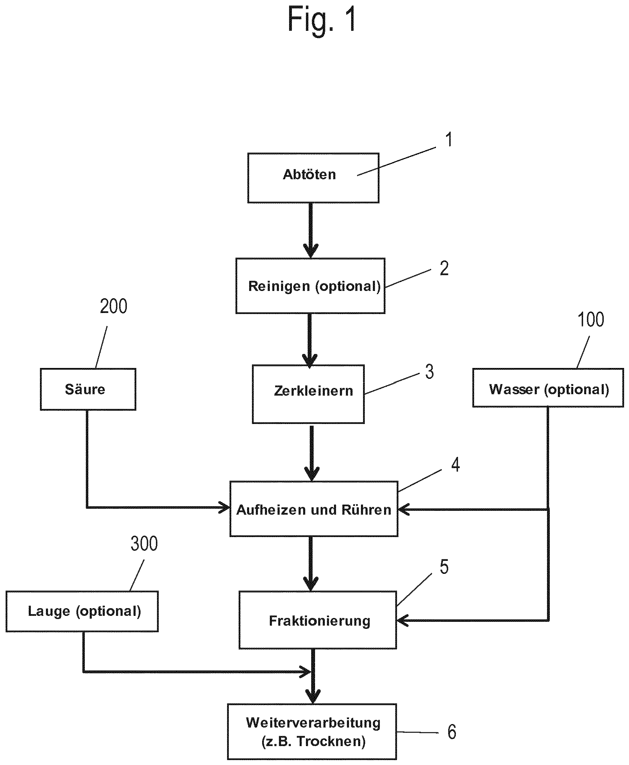

Die WO 2015/070194 A1 offenbart ein Verfahren zur Gewinnung einer getrockneten Insektenpülpe aus welcher zuvor Chitin abgetrennt wurde. Dies kann durch Filtration oder alternativ auch durch zentrifugale Behandlung erfolgen. Gemäß der Lehre der WO 2015/070194 A1 erfolgt eine Zerkleinerung der gesamten Insekten, eine anschließende Behandlung der Insektenpülpe, einschließlich des Abtrennens von Chitin und schließlich ein Eindampfen der verbleibenden Insektenpülpe zu einem Feststoff (siehe z.B. Fig. 1). Gemäß S.14 Zeile 21 kann es zusätzlich erforderlich sein, den Eintrocknungsrückstand nochmals über eine gewisse Zeit zu erwärmen um Mikroben oder dergleichen abzutöten.

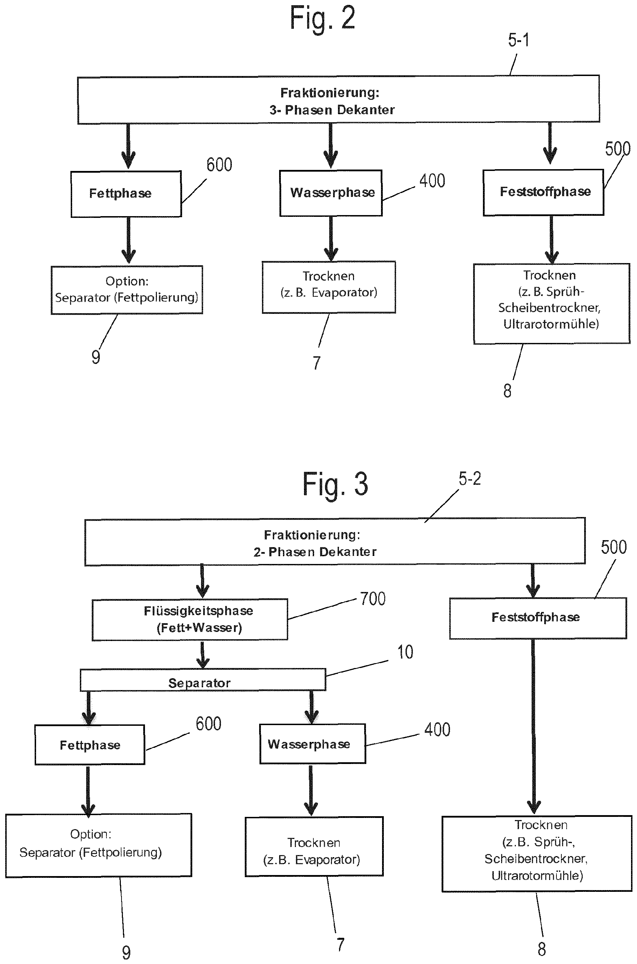

Die WO 2017/066880 A1 offenbart ein Verfahren zur Verarbeitung von Insekten. In dem offenbarten Verfahren wird in Fig. 2A, 2B, 2C, 3A, 3B, 4A, 4B jeweils als Ausgangsprodukt "at least one frozen washed insect or freeze dried insect" eingesetzt. Fig. 1 zeigt unter "prior art" die Form des Abtötens. Dabei erfolgt in Schritt 2 zunächst der Einsatz zumindest eines lebenden Insekts und in Schritt 4 ein "Gefrieren und Lagern". Es ist Allgemeinwissen, dass die meisten Insekten ein Gefrieren nicht überleben. Somit erfolgt das Abtöten gemäß der Lehre der WO 2017/066880 A1 durch Gefrieren.

Die WO 2018/ 122294 A1 offenbart ein Verfahren zur Verarbeitung einer Biomasse unter simultaner Gewinnung von Proteinen und Lipiden aus Insekten. In den Ausführungsbeispielen wird ein Abtöten der Insekten durch Gefriertrocknung beschrieben. Hierbei wird eine Strategie zur Verarbeitung der Biomasse verfolgt, welche eine Trennung in eine Fett- und eine Wasserphase umfasst. Die Wasserphase kann u.a. auch unlösliche Bestandteile (Feststoffe) aufweisen. Eine gesonderte Feststoffphase wird nicht abgeschieden.

Es hat sich gezeigt, dass die vorbeschriebenen Verfahren entweder vergleichsweise teuer und arbeitsintensiv sind oder nur eine ungenügende Entfettung der Feststofffraktion ermöglichen, die eine gute Weiterverarbeitung verhindert.

Daher ist es die Aufgabe der vorliegenden Erfindung eine weitergehende Optimierung der Verarbeitung von Insektenpülpe zu erreichen.

Die vorliegende Erfindung löst diese Aufgabe durch den Gegenstand des Anspruchs 1.

Ein erfindungsgemäßes Verfahren dient der Gewinnung von Produkten der Nahrungs- und/oder Futtermittelindustrie aus Insekten, insbesondere von Insekten im Larvenstadium. Es zeichnet sich durch die folgenden Schritte aus:
a) Abtöten der Insekten durch Erwärmen: wobei die unzerkleinerten Insekten zum Zwecke des Abtötens mit Wasser vermischt werden; wobei die Temperatur des Wassers, in welchem die Insekten geführt sind, beim Abtöten mehr als 60°C beträgt; und wobei ein Abtrennen des Wassers nach dem Abtöten erfolgt;
b) Zerkleinern der Insekten unter Ausbildung einer Insektenpülpe;
c) pH-Wertverschiebung der Insektenpülpe in einen sauren Bereich durch Zugabe einer Säure und Malaxieren der Insektenpülpe über einen Zeitraum von zumindest 45 Minuten; und
d) Fraktionierung der Insektenpülpe durch zentrifugale Bearbeitung in zumindest zwei Fraktionen
   i) eine Feststoffphase und
   ii) eine Fettphase ;
   wobei das Verfahren ohne Zugabe zusätzlicher Enzyme erfolgt.

Die Fettphase kann auch als Ölfraktion beschrieben werden. Die Feststofffraktion kann proteinhaltig sein. Alternativ kann auch eine zusätzliche dritte wässrige Proteinfraktion gewonnen werden, welche im Anschluss z.B. durch einen Evaporator getrocknet werden kann, so dass das gewonnene Wasser im Prozess rückführbar ist und dass das gewonnene Protein eine gesonderte Wertstoffphase darstellt.

Die proteinhaltige Feststofffraktion kann als Futtermittel eingesetzt werden.

Bevorzugt kann die Feststofffraktion in weitergehenden Verfahrensschritten noch gemahlen und/oder getrocknet werden.

Dabei ist die vorherige Fett- bzw. Ölabtrennung insofern von besonderer Bedeutung, da andernfalls die weitergehende Zerkleinerung in den weitergehenden Verfahrensschritten nicht oder nur sehr schwer möglich ist. Es kommt zu einem Schmieren, was z.B. die Verarbeitung in einer Futtermühle nahezu unmöglich macht.

Weiterhin erlaubt der geringe Fettgehalt auch eine Zudosierung eines oder mehrerer Fremdfette und/oder -öle, also von Fetten und/oder Ölen welche nicht in den ursprünglich eingesetzten Insekten enthalten sind, was die Rezepturvarianz erhöht. So können z.B. essentielle Öle und/oder Fette zudosiert werden.

Die Produkte der Nahrungs- und/oder Futtermittelindustrie umfassen u.a. Tierfutter aber auch Sportlernahrung.

Die Ölfraktion bzw. Fettfraktion kann als gesonderte Wertstoffphase, vorzugsweise als Brennstoff und/oder als Tierfutter, eingesetzt werden.

Wie sich anhand von Versuchen überraschend gezeigt hat, ermöglicht die Kombination aus Malaxieren, insbesondere Durchmischen und/oder Durchkneten, über den vorbeschriebenen Mindestzeitraum bei zusätzlicher Säurezugabe eine wesentlich bessere Trenneffizienz der Abtrennung von Fett bzw. Öl aus dem Feststoff (um mehr als 20% höher) als bei der Vorgehensweise der WO 2014/123420 A1.

Vorteilhafte Ausgestaltungen sind Gegenstand der Unteransprüche.

Insbesondere kann das erfindungsgemäße Verfahren ohne die zusätzliche Zufuhr von Enzymen durchgeführt werden, was das Verfahren durch Weglassen der meist teuren Enzyme besonders wirtschaftlich macht und zudem besonders effizient, da eine Enzymabtrennung und/oder -rückgewinnung unnötig wird.

Die Fraktionierung der Insektenpülpe in drei Phasen kann einstufig oder mehrstufig erfolgen. Eine einstufige Fraktionierung kann z.B. in einem 3-Phasen-Dekanter erfolgen. Eine mehrstufige Fraktionierung kann derart erfolgen, dass zwei zentrifugale Trennschritte nacheinander erfolgen, wobei für die Trennschritte sowohl Dekanter als auch Separatoren eingesetzt werden können.

Die Feststofffraktion kann anschließend einer Trocknung unterzogen werden.

Die Säurezugabe kann vorteilhaft innerhalb von weniger als 10 Minuten, besonders bevorzugt innerhalb von weniger als 5 Minuten, nach der Zerkleinerung erfolgen, so dass Nebenreaktionen oder Umlagerungen wie z.B. Proteinfaltungen und/oder oxidative Effekte vor der Säurezugabe vorteilhaft vermieden werden.

Der pH-Wert der Insektenpülpe nach der Zugabe der Säure weniger als pH=6,5 kann vorzugsweise im Bereich von pH = 2 bis pH = 4,5, besonders bevorzugt zwischen pH = 2 bis pH = 3, liegen. Besonders in diesen pH-Bereichen wurde eine besonders effektive Abtrennung der Ölphase beobachtet.

Die Temperatur während des Malaxierens und/oder des Fraktionierens kann zumindest 60°C, vorzugsweise 80-100°C, insbesondere 85-95°C betragen. Bei dieser Temperatur wird eine besonders gute zentrifugale Abtrennung der Ölphase erreicht.

Das Malaxieren kann vorteilhaft zumindest über einen Zeitraum von 55 Minuten, vorzugsweise von 60-130 Minuten, besonders bevorzugt 90-120 Minuten erfolgen.

Die durch die Fraktionierung erhaltene Fettphase kann durch ein Fettpolieren, z.B. durch Einsatz eines Trennseparators, aufgearbeitet werden, um so eine Ölphase mit besonders hoher Reinheit zu erhalten.

Die mittlere Partikelgröße der Insektenteile in der Insektenpülpe nach dem Zerkleinern kann vorteilhaft kleiner sein als 2 mm, insbesondere zwischen 1 bis 2 mm.

Die Säure kann vorteilhaft eine verdünnte Salzsäure sein, vorzugsweise eine Salzsäure mit einer Konzentration von 0,001 mol/l bis 0,5 mol/l. Chloride sind überwiegend gut in Wasser löslich, so dass bestimmte Salze mit der Wasserphase vom Feststoff abgetrennt werden können.

Nach der Fraktionierung kann vorteilhaft eine Neutralisierung der Fraktion durch Zugabe einer Base, insbesondere durch Zugabe einer verdünnten NaOH-Lösung, erfolgen, für eine bessere Verträglichkeit der Feststoffphase bei dessen Verwendung als Nahrungsmittel oder Futtermittel.

Vor dem Zerkleinern der Insekten erfolgt für die bessere Prozessführung ein Abtöten der Insekten.

Nach dem Abtöten der Insekten und vor dem Zerkleinern der Insekten kann ein Reinigen der Insekten erfolgen. Dies kann vorzugsweise durch eine Waschung, insbesondere durch eine oberflächliche Waschung, erfolgen.

Vorteilhaft für die Einstellung der Viskosität zur Überführung und der Trenneffizienz kann eine Wasserzugabe beim Malaxieren und/oder Fraktionieren erfolgt.

Die Fraktionierung kann in zumindest einem Dekanter, insbesondere in einem 3-Phasen-Dekanter, einem 2-Phasen-Dekanter und einem Separator und/oder einem 2-Phasen-Dekanter erfolgen.

Weiterhin wird eine Feststoffphase gewonnen aus Insekten mit einem Restölgehalt von weniger als 15 Gew.%, insbesondere gewonnen nach dem erfindungsgemäßen Verfahren beschrieben. Die Feststoffphase ist aus Insekten gewonnen und daher im Unterschied zu Pflanzen chitinhaltig.

Der Proteingehalt der Feststoffphase ist vergleichsweise hoch. Er beträgt mehr als 50 Gew.%, vorzugsweise mehr als 90 Gew.%, besonders bevorzugt mehr als 95 Gew.%.

Anders als bei anderen tierischen Proteinquellen wie z.B. Schwein, Rind oder Huhn kann die Feststoffphase frei von Antibiotika hergestellt werden und sie weist aufgrund der Verarbeitung und der Züchtung eine sehr günstige CO₂-Bilanz auf.

Nachfolgend werden mehrere Varianten des erfindungsgemäßen Verfahrens detailliert und unter Zuhilfenahme der beiliegenden Figuren näher erläutert. Einzelne nachfolgend beschriebene Details können losgelöst vom konkreten Ausführungsbeispiel auch für sich als gesonderte Merkmale entnommen werden.

Es zeigen:
- Fig. 1: grundlegendes Verfahrensschema eines Ausführungsbeispiels des erfindungsgemäßen Verfahrens;
- Fig. 2: Verfahrensdetails einer ersten Variante einer Fraktionierung im Rahmen des erfindungsgemäßen Verfahrens;
- Fig. 3: Verfahrensdetails einer zweiten Variante einer Fraktionierung im Rahmen des erfindungsgemäßen Verfahrens;
- Fig. 4: Verfahrensdetails einer dritten Variante einer Fraktionierung im Rahmen des erfindungsgemäßen Verfahrens;
- Fig. 5: tabellarische Darstellung von Versuchsergebnissen bei der Bearbeitung von Mehlkäferlarven nach dem erfindungsgemäßen Verfahren
- Fig. 6: Wärmetauscher zum Abtöten von Insekten

Als Ausgangsmaterial für die Proteingewinnung werden Insekten und besonders bevorzugt Insektenlarven genutzt. Besonders bevorzugt können Insektenlarven der Hermetia illucens (Schwarze Soldatenfliege), der Ceratitis capitata (Mediterrane Fruchtfliege) und/oder der Tenebrio molitor (Mehlkäfer) genutzt werden. Es kommen allerdings auch andere Insekten und bevorzugt deren Insekten im Larvenstadium in Betracht.

In einem ersten Verfahrensschritt 1 erfolgt das Abtöten der Insektenlarven. Das

Abtöten erfolgt durch die Behandlung in einem Heißwasserbad

In einem zweiten Verfahrensschritt 2 kann optional ein Reinigen der Insektenlarven erfolgen. Dies kann durch eine Siebung erfolgen.

In einem dritten Verfahrensschritt 3 erfolgt das Zerkleinern der Insektenlarven zu einer Insektenpülpe.

Hierbei werden die Larven zerkleinert (z.B. zermahlen), um den Aufschluss durch nachfolgende pH-Absenkung zu erleichtern. Dies kann mittels einer Mühle oder Presse erfolgen. Die Zerkleinerung kann vorteilhaft auf eine mittlere Partikelgröße < 2 mm, insbesondere auf eine mittlere Partikelgröße bzw. Korngröße zwischen 1 bis 2 mm erfolgen. Hierfür kann beispielsweise ein Fleischwolf eingesetzt werden.

Kleinere Korngrößen können zwar einen besseren Aufschluss ermöglichen, deren Herstellung durch z.B. rotierende Schneidwerke können aber durch das Zerschlagen der Ölanteile die Bildung einer Emulsion begünstigen, was wiederum die Separation verschlechtert.

In einem vierten Verfahrensschritt 4 erfolgt ein Aufheizen und Rühren der Insektenpülpe. Darüber hinaus wird der pH-Wert abgesenkt., durch Zugabe einer Säure und Malaxieren der Insektenpülpe über einen Zeitraum von zumindest 45 Minuten

Die durch die Zerkleinerung entstehende Insektenpülpe kann unter Wärmeeinwirkung über eine gewisse Zeit von vorzugsweise bis zu 3 Stunden gerührt und dabei aufgeheizt und/oder auf Temperatur gehalten werden. Die bevorzugte Temperatur in diesem Schritt beträgt 60-100°C. Dieser Prozess wird auch als Malaxieren bezeichnet. Die Behandlung der Insektenpülpe kann in diesem Schritt in einem Malaxeur erfolgen.

Das Malaxieren kann bevorzugt über einen Zeitraum von 60-130 Minuten, besonders bevorzugt 90-120 Minuten erfolgen und ebenfalls bevorzugt zeitgleich mit oder unmittelbar nach der Säurezugabe erfolgen.

Besonders bevorzugt liegt die Temperatur während des Malaxierens in einem Bereich von 80-100°C, insbesondere unterhalb des Siedepunkts von Wasser also vorzugsweise bei 85-95°C. Dies dient vorzugsweise einer Beendigung der Enzymaktivität und verhindert dadurch eine Denaturierung, da die aus Insekten gewonnene breiige Substanz sich andernfalls schnell oberflächlich schwarz färbt. Der natürliche pH-Wert von Insektenlarven ist typischerweise im leicht basischen Bereich. Dieser beträgt etwa pH = 8,0 bei der Larve der schwarzen Soldatenfliege und pH = 7,3 bei der mediterranen Fruchtfliegenlarve.

Erfindungsgemäß wird der pH-Wert der Insektenpülpe nach der Zerkleinerung durch Zugabe einer Säure in den sauren Bereich bei pH=1,5 bis 6,5 abgesenkt.

Dies erfolgt unter Zugabe einer Säure 200 und optional unter Zugabe von Wasser 100.

Die Zugabe von Wasser 100 zur Insektenpülpe hängt davon ab, ob die Insektenpülpe genügend eigene Flüssigkeit enthält. Ist dies nicht gegeben, so muss zusätzliches Verdünnungswasser zum Malaxeur und/oder in einem nachfolgenden Verfahrensschritt 5 einer Fraktionierung mittels Zentrifuge hinzugegeben werden.

Hinreichend Flüssigkeit ist vorhanden, wenn in der Insektenpülpe, bei einem Schleudertest in der Laborzentrifuge, freie Flüssigkeit unter der Ölphase sichtbar ist.

Die Säurezugabe beginnt unmittelbar, also bevorzugt innerhalb von weniger als 10 Minuten, besonders bevorzugt innerhalb von weniger als 5 Minuten, nach der Zerkleinerung in Verfahrensschritt 3.

Die Säurezugabe kann bevorzugt innerhalb von weniger als 5 Minuten abgeschlossen sein.

Als Säure kann bevorzugt eine starke anorganische Säure genutzt werden. Diese Säure kann als verdünnte Säure in wässriger Form, vorzugsweise als 1 molare Säure oder in noch höherer Verdünnung, zugegeben werden um eine punktuelle Übersäuerung der Insektenpülpe bei der Säurezugabe und um Dissoziationseffekte zu vermeiden.

Als Säure ist besonders bevorzugt Salzsäure HCl, vorzugsweise als HCl-Lösung.

Der bevorzugte eingestellte pH-Wert der Insektenpülpe nach der Säurezugabe beträgt pH = 2 bis pH = 4,5. Besonders bevorzugt liegt der eingestellte pH-Wert der Insektenpülpe zwischen pH = 2 bis pH = 3.

In einem fünften Verfahrensschritt 5 erfolgt eine Fraktionierung der Insektenpülpe.

Die Fraktionierung von Insektenlarven erfolgt durch eine Trennvorrichtung der zentrifugalen Trenntechnik

Die angesäuerte und malaxierte Insektenpülpe kann nun mittels einer Zentrifuge, insbesondere durch eine Dekanterzentrifuge in zumindest zwei Fraktionen aufgetrennt werden.

Die Dekanterzentrifuge kann dabei vorzugsweise bei mindestens 3500 G betrieben werden. Hierbei zeigt sich, dass sich durch die vorherige Malaxierung und die Zugabe von Säure niedrigere Restölwerte im Feststoff erzielen lassen als ohne die pH-Wert-Absenkung und/oder ohne Malaxieren.

Bevorzugt und besonders geeignet für die Abtrennung der Feststoffphase ist dabei die Verwendung eines Dekanters. Hierfür kann ein 3-Phasen-Dekanter oder ein 2-Phasen-Dekanter genutzt werden.

Während oder im Anschluss an die Fraktionierung 5 kann optional die Zugabe einer Lauge 300 zur Neutralisierung einzelner Fraktionen, vorzugsweise der Feststoffphase und/oder der Wasserphase erfolgen.

Variationen der Fraktionierung des Verfahrensschritts 5 sind in Fig. 2-4 dargestellt.

In Verfahrensschritt 5 kann gemäß Fig. 2 eine einstufige Fraktionierung 5-1, durch Aufteilung der Insektenpülpe in mehrere Fraktionen, in einem 3-Phasen-Dekanter erfolgen.

Dabei wird die Insektenpülpe in eine Fettphase 600, in eine Wasserphase 400 und in eine Feststoffphase 500 aufgeteilt. Die Begriffe "Phase" und "Fraktion" sind im Rahmen der vorliegenden Erfindung synonym zu verstehen.

In Verfahrensschritt 5 kann gemäß Fig. 3 in einer zweiten Fraktionierung 5-2 mehrstufig in einem 2-Phasen-Dekanter als erste Fraktionierungsstufe und einem Separator als zweite Fraktionierungsstufe erfolgen.

Dabei wird die Insektenpülpe in eine fetthaltige wässrige Phase 700 und eine Feststoffphase 500 unterteilt. Die wässrige fetthaltige Phase 700 kann sodann in einem Separator in eine Wasserphase 400 und in Fettphase 600 aufgeteilt werden.

Sowohl in der Wasserphase 400 als auch in der Feststoffphase 500 können Proteine der Insektenlarven enthalten sein. Die Proteine können z.B. als Proteinquark suspendiert im Wasser der Wasserphase 400 vorliegen.

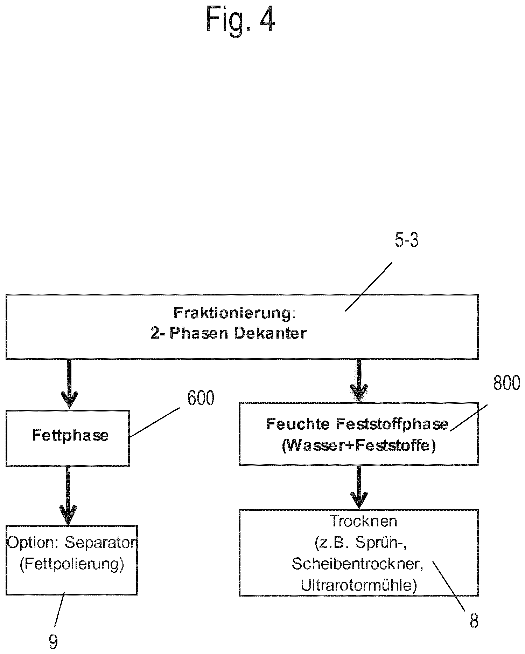

In Verfahrensschritt 5 kann gemäß Fig. 4 auch in einer dritten Fraktionierung 5-3 mehrstufig auch in einem 2-Phasen-Dekanter und gefolgt von einer anschließenden Behandlung in einem Evaporator erfolgen.

Dabei wird die Insektenpülpe in eine Fettphase 600 und eine feststoffhaltige wässrige Phase 800 unterteilt. Aus der wässrigen feststoffhaltigen Phase 800 kann sodann durch eine Trocknung 8 eine proteinreiche Feststoffphase 500 hergestellt werden.

Die Entfettung des Feststoffes, lässt sich durch die Einstellung der Trennvorrichtung beeinflussen.

Hierfür kann optional eine Messung des Fettgehalts der Feststoffphase erfolgen und die Drehzahl und/oder die Differenzdrehzahl des Dekanters können angepasst werden, sofern der Fettgehalt der Feststoffphase einen vorgegebenen Sollwert überschreitet.

Andererseits hat die Art der Herstellung der Insektenpülpe einen Einfluss auf das Trennergebnis.

Überraschenderweise zeigt eine Verschiebung des pH-Wertes der Insektenpülpe, einen positiven Einfluss auf das Trennverhalten, wodurch sich ein besonders niedriger Restfettgehalt im entfetteten Feststoff ergibt (niedrigere Fettwerte).

Schließlich kann in einem sechsten Verfahrensschritt 6 eine Weiterverarbeitung der Fraktionen, z.B. durch einen Trocknungsschritt, erfolgen.

In Fig. 2 erfolgt die Weiterverarbeitung 6 der Fettphase 600 durch ein Fettpolieren 9. Dies kann in einem Separator erfolgen.

Die Wasserphase 400 kann, insbesondere in einem Evaporator, einem Trocknen 7 unterzogen werden.

Die in der Fraktionierung 5 nach Fig. 2-4 erhaltene Feststoffphase 500 kann durch einen Trocknungsschritt 8, vorzugsweise in einem Sprüh- und/oder Scheibentrockner oder in einer Trockenmühle, insbesondere einer sogenannten Ultrarotormühle, getrocknet werden.

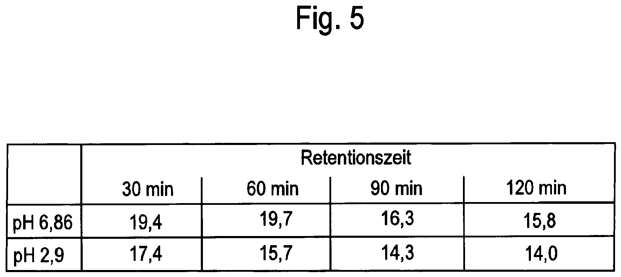

Fig. 5 zeigt eine Tabelle eines Versuchsergebnisses als Beleg der überraschend besseren Trenneffizienz für die Abtrennung von Fett aus den übrigen Fraktionen aufgrund der vorbeschriebenen Vorbehandlungsschritte.

Die Ergebnisse geben den Restfettgehalt (Werte bezogen auf TS - Trockensubstanz) im Feststoff.

Die Parameter für den in Fig. 5 abgebildeten Schleudertest waren die Folgenden
Beschleunigung = 4800 g,
Schleuderzeit = 1 bis 2 Minuten,
Temperatur der Insektenpülpe und der Schleuder mehr als 60°C, max. 95°C,
Ausgangsmaterial: Mehlkäferlarven (zerkleinert)

Fig. 5 zeigt tabellarisch die Retentionszeit, welche die Zeit ist, in welcher die Insektenpülpe im Malaxeur verbleibt.

Weiterhin ist tabellarisch der pH-Wert der Insektenpülpe beim Schleuderversuch aufgeführt.

Man erkennt eine Absenkung des Restfettgehalts von mehr als 25% gegenüber einer Insektenpülpe aus Mehlkäferlarven ohne pH-Behandlung und bei lediglich geringerer Verweilzeit im Malaxeur.

Versuche haben gezeigt, dass das vorhergehende Abtöten von Insekten in Kombination mit der Feststoffabtrennung zu einer deutlichen Verringerung des "Browning-Effekts", also der Braunverfärbung nach der Zerkleinerung führt.

Dies wurde insbesondere bei einem Erwärmen, insbesondere Abkochen, z.B. in einem Heißwasserbad beobachtet. Ein Erwärmen kann zudem, anders als z.B. ein Einfrieren der Insekten, in-line erfolgen, also ohne Batch-Betrieb. Dies erleichtert die verfahrenstechnische Anwendung und ermöglicht eine weitergehende Automatisierung des Verarbeitungsprozesses im Vergleich zum Einfrieren der Insekten.

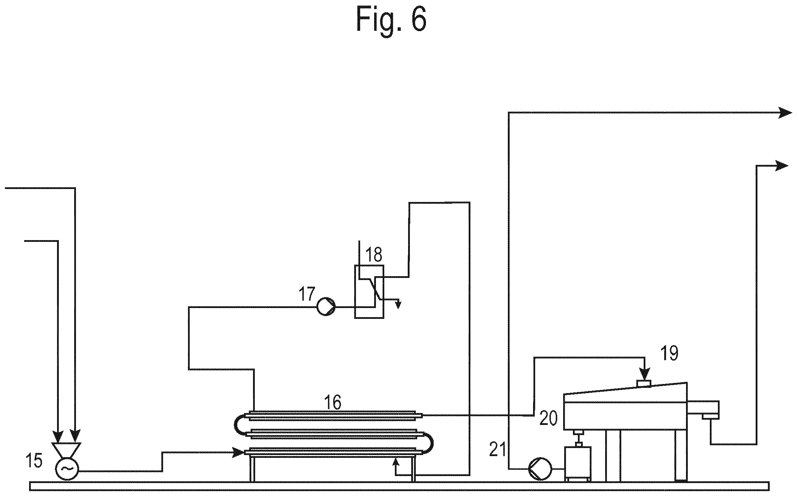

Alternativ kann das Erwärmen auch durch Einsatz eines Rohrwärmetauschers erfolgen, wie dies in Fig. 6 dargestellt wird. Hierbei werden die Insekten zusammen mit Wasser durch den Rohrwärmetauscher gefördert, darin erhitzt und abgetötet.

Als Varianten des Erhitzens zum Zweck des Abtötens bietet sich ausgehend vom Einsatzmaterial der lebenden Insekten eine Verarbeitung im Rahmen eines kontinuierlichen Verfahrens bzw. eines In-line-Verfahrens an. Dies ist beim Erwärmen ein besonderer Vorteil gegenüber eines wesentlich aufwendigeren Gefrierprozesses.

Der Temperatureintrag vor der Zerkleinerung bewirkt eine Deaktivierung der insekteneigenen Enzyme bereits zu Beginn des Verfahrens, was das Verfärben der zerkleinerten Insektenmasse (Browning) verhindert bzw. deutlich abschwächt. Dies ist ein wesentlicher Vorteil bei der späteren Verwendung der Feststofffraktion.

Bei Nutzung eines Mediums wie z.B. Wasser werden die Insekten bzw. Larven in diesen Schritt zudem gewaschen, was eine zusätzliche Erhöhung der Produktqualität zur Folge haben kann.

Dies ist in Fig. 6 dargestellt. Hier werden Wasser und lebende Insekten durch eine Pumpe 15 durch einem Wärmetauscher 16 geführt. Das Wasser kann bereits vorgewärmtes Wasser sein, welches innerhalb des Wärmetauschers 16, z.B. eines Rohrwärmetauschers, weiter erwärmt wird. Dadurch kommt es bei zum Abtöten von Insekten durch Erwärmen bzw. Abkochen, analog wie in einem Heißwasserbad.

Die Temperatur des Wassers, in welchem die Insekten geführt sind, beträgt beim Abtöten mehr als 60°C, vorzugsweise 75- 100°C.

Die Verweilzeit im Wärmetauscher bis zum vollständigen Abtötet ist abhängig von der Durchflussmenge der Insekten, der erreichten Wassertemperatur und der Leistung des Wärmetauschers. Die Zeit kann rechnerisch oder durch Versuche ermittelt werden.

Die abgetöteten unzerkleinerten Insekten werden sodann von der wässrigen Lösung getrennt. Dies kann vorzugsweise durch Sieben erfolgen. In Fig. 6 ist hierfür eine Siebvorrichtung in Form eines Schwingsiebes 19 vorgesehen.

Unterhalb der Siebvorrichtung 19 ist ein Sammeltank 20 angeordnet, von dem Sammeltank kann die Flüssigkeit mit einer Pumpe 21 über eine Ableitung abgeführt werden.

Der Wärmetauscher 16 weist einen Kreislauf zur Zuführung eines Wärmemittels, z.B. Heißwasser, auf, mit welchem das Wasser/Insekten-Gemisch im Wärmetauscher indirekt erwärmt werden kann. Dieser Kreislauf weist zumindest eine Pumpe 17 und einen zweiten Wärmetauscher 18 auf, welcher z.B. mit Heißdampf betrieben werden kann. Die abgetöteten unzerkleinerten Insekten verlassen die Siebvorrichtung 19 und können einer Zerkleinerungsvorrichtung z.B. einem Häcksler, einer Presse oder einer Mühle zugeführt werden.

Das gesamte Verfahren, einschließlich dem Abtöten, kann in kontinuierlicher Verfahrensführung erfolgen, so dass Nebenreaktionen des biologischen Produktes größtenteils verhindert oder zumindest verringert werden.

Das Endprodukt hat somit weniger Verunreinigungen und muss nicht aufwendig aufgereinigt werden.

### Bezugszeichen

- Verfahrensschritt 1: Abtöten
- Verfahrensschritt 2: Reinigen
- Verfahrensschritt 3: Zerkleinern
- Verfahrensschritt 4: Malaxieren
- Verfahrensschritt 5: Fraktionierung
- 5-1: erste Fraktionierungsvariante
- 5-2: zweite Fraktionierungsvariante
- 5-3: dritte Fraktionierungsvariante
- 6: Weiterverarbeitung
- 7: Trocknung
- 8: Trocknung
- 9: Fettpolieren

- 15: Pumpe
- 16: Wärmetauscher
- 17: Pumpe
- 18: zweiter Wärmetauscher
- 19: Schwingsieb
- 20: Sammeltank
- 21: Pumpe

- 100: Wasser
- 200: Säure
- 300: Lauge
- 400: Wasserphase
- 500: Feststoffphase
- 600: Fettphase
- 700: wässrige fetthaltige Phase
- 800: wässrige feststoffhaltige Phase

## Patentansprüche

1. Verfahren zur Gewinnung von Produkten der Nahrungs- und/oder Futtermittelindustrie aus Insekten, insbesondere von Insekten im Larvenstadium, **gekennzeichnet durch die folgenden Schritte:**
a) Abtöten der Insekten (Verfahrensschritt 1) durch Erwärmen:
wobei die unzerkleinerten Insekten zum Zwecke des Abtötens mit Wasser vermischt werden;
wobei die Temperatur des Wassers, in welchem die Insekten geführt sind, beim Abtöten mehr als 60°C beträgt; und
wobei ein Abtrennen des Wassers nach dem Abtöten erfolgt;
b) Zerkleinern der Insekten (Verfahrensschritt 3) unter Ausbildung einer Insektenpülpe;
c) pH-Wertverschiebung der Insektenpülpe in einen sauren Bereich durch Zugabe einer Säure (200) und Malaxieren der Insektenpülpe (Verfahrensschritt 4) über einen Zeitraum von zumindest 45 Minuten; und
d) Fraktionierung der Insektenpülpe (Verfahrensschritt 5) durch zentrifugale Bearbeitung in zumindest zwei Fraktionen
i) eine Feststoffphase (500) und
ii) eine Fettphase (600);
wobei das Verfahren ohne Zugabe zusätzlicher Enzyme erfolgt.

2. Verfahren nach Anspruch 1, **dadurch gekennzeichnet, dass** die Fraktionierung (Fraktionierung 5-2 und 5-3) der Insektenpülpe mehrstufig erfolgt.

3. Verfahren nach Ansprüche 1 oder 2, **dadurch gekennzeichnet, dass** die Feststoffphase einer Trocknung (8) unterzogen wird.

4. Verfahren nach einem der vorhergehenden Ansprüche, **dadurch gekennzeichnet, dass** die Säurezugabe (200) innerhalb von weniger als 10 Minuten, besonders bevorzugt innerhalb von weniger als 5 Minuten, nach der Zerkleinerung (Verfahrensschritt 3) erfolgt.

5. Verfahren nach einem der vorhergehenden Ansprüche, **dadurch gekennzeichnet, dass** der pH-Wert der Insektenpülpe nach der Zugabe der Säure (200) weniger als pH=6,5 beträgt, vorzugsweise im Bereich von pH = 2 bis pH = 4,5, insbesondere zwischen pH = 2 bis pH = 3 liegt.

6. Verfahren nach einem der vorhergehenden Ansprüche, **dadurch gekennzeichnet, dass** die Temperatur während des Malaxierens (Verfahrensschritt 4) und/oder des Fraktionierens (Verfahrensschritt 5) zumindest 60°C, vorzugsweise 80-100°C, insbesondere 85-95°C beträgt.

7. Verfahren nach einem der vorhergehenden Ansprüche, **dadurch gekennzeichnet, dass** das Malaxieren (Verfahrensschritt 4) zumindest über einen Zeitraum von 55 Minuten, vorzugsweise von 60-130 Minuten, besonders bevorzugt 90-120 Minuten erfolgt.

8. Verfahren nach einem der vorhergehenden Ansprüche, **dadurch gekennzeichnet, dass** die durch das Fraktionieren (Verfahrensschritt 5) erhaltene Fettphase (600) durch ein Fettpolieren aufgearbeitet wird.

9. Verfahren nach einem der vorhergehenden Ansprüche, **dadurch gekennzeichnet, dass** die mittlere Partikelgröße der Insektenteile in der Insektenpülpe nach dem Zerkleinern (Verfahrensschritt 3) kleiner sind als 2 mm, insbesondere zwischen 1 bis 2 mm liegen.

10. Verfahren nach einem der vorhergehenden Ansprüche, **dadurch gekennzeichnet, dass** das Zerkleinern durch Scheren der Insekten, vorzugsweise in einem Fleischwolf, erfolgt.

11. Verfahren nach einem der vorhergehenden Ansprüche, **dadurch gekennzeichnet, dass** die Säure (200) eine verdünnte Salzsäure ist, vorzugsweise eine Salzsäure mit einer Konzentration von 0,001 mol/l bis 0,5 mol/l.

12. Verfahren nach einem der vorhergehenden Ansprüche, **dadurch gekennzeichnet, dass** nach dem Fraktionieren (Verfahrensschritt 5) eine Neutralisierung zumindest einer der Phasen durch Zugabe einer Base (300), insbesondere durch Zugabe einer verdünnten NaOH-Lösung, erfolgt.

13. Verfahren nach einem der vorhergehenden Ansprüche, **dadurch gekennzeichnet, dass** nach dem Abtöten der Insekten (Verfahrensschritt 1) und vor dem Zerkleinern der Insekten (Verfahrensschritt 3) ein Reinigen, insbesondere durch oberflächliche Waschung, der Insekten (Verfahrensschritt 2) erfolgt.

14. Verfahren nach einem der vorhergehenden Ansprüche, **dadurch gekennzeichnet, dass** eine Wasserzugabe (100) beim Malaxieren (Verfahrensschritt 4) und/oder Fraktionieren (Verfahrensschritt 5) erfolgt.

15. Verfahren nach einem der vorhergehenden Ansprüche, **dadurch gekennzeichnet, dass** das Fraktionieren (Verfahrensschritt 5) in zumindest einem Dekanter, insbesondere in einem 3-Phasen-Dekanter, einem 2-Phasen-Dekanter und einem Separator und/oder einem 2-Phasen-Dekanter erfolgt.

16. Verfahren nach einem der vorhergehenden Ansprüche, **dadurch gekennzeichnet, dass** die unzerkleinerten Insekten zum Zwecke des Abtötens in Wasser suspendiert werden.

17. Verfahren nach einem der vorhergehenden Ansprüche, **dadurch gekennzeichnet, dass** das Abtöten in einem Wärmetauscher erfolgt.

18. Verfahren nach einem der vorhergehenden Ansprüche, **dadurch gekennzeichnet, dass** die Temperatur des Wassers in welchem die Insekten geführt sind, beim Abtöten 75-100°C beträgt.

19. Verfahren nach einem der vorhergehenden Ansprüche, **dadurch gekennzeichnet, dass** ein Abtrennen des Wassers nach dem Abtöten durch Sieben erfolgt.

## Claims

1. Method for obtaining products of the food industry and/or feed industry from insects, in particular insects in the larval stage, **characterized by the following steps:**
a) Killing the insects (method step 1) by heating:
wherein the uncrushed insects are mixed with water to kill them;
wherein the temperature of the water in which the insects are carried is greater than 60°C during killing; and
wherein a separation of the water takes place after killing;
b) Comminuting the insects (method step 3) with the formation of an insect pulp;
c) Shifting the pH-value of the insect pulp to an acidic range by adding an acid (200) and malaxing the insect pulp (method step 4) for at least 45 minutes; and
d) Fractioning of the insect pulp (method step 5) by centrifugal processing into at least two fractions
i) a solid phase (500) and
ii) a fatty phase (600);
wherein the method takes place without the addition of additional enzymes.

2. Method according to claim 1, **characterized in that** the fractioning (fractioning 5-2 and 5-3) of the insect pulp is carried out in several stages.

3. Method according to claims 1 or 2, **characterized in that** the solid phase is subjected to drying (8).

4. Method according to one of the preceding claims, **characterized in that** the addition of acid (200) takes place within less than 10 minutes, particularly preferably within less than 5 minutes, after comminution (method step 3).

5. Method according to one of the preceding claims, **characterized in that** the pH-value of the insect pulp after the addition of the acid (200) is less than pH=6.5, preferably in the range of pH=2 to pH=4.5, in particular between pH=2 to pH=3.

6. Method according to one of the preceding claims, **characterized in that** the temperature during malaxing (method step 4) and/or fractioning (method step 5) is at least 60°C, preferably 80-100°C, in particular 85-95°C.

7. Method according to one of the preceding claims, **characterized in that** the malaxing (method step 4) is carried out at least over a period of 55 minutes, preferably 60-130 minutes, particularly preferably 90-120 minutes.

8. Method according to one of the preceding claims, **characterized in that** the fatty phase (600) obtained by fractioning (method step 5) is processed by fat polishing.

9. Method according to one of the preceding claims, **characterized in that** the average particle size of the insect parts in the insect pulp after comminuting (method step 3) is less than 2 mm, in particular between 1 and 2 mm.

10. Method according to one of the preceding claims, **characterized in that** comminuting is carried out by shearing the insects, preferably in a meat grinder.

11. Method according to one of the preceding claims, **characterized in that** the acid (200) is a diluted hydrochloric acid, preferably a hydrochloric acid with a concentration of 0.001 mol/L to 0.5 mol/L.

12. Method according to one of the preceding claims, **characterized in that** after fractioning (method step 5), neutralization of at least one of the phases is carried out by adding a caustic solution (300), in particular by adding a diluted NaOH solution.

13. Method according to one of the preceding claims, **characterized in that** after killing the insects (method step 1) and before comminuting the insects (method step 3), a cleaning, in particular by surface washing, of the insects (method step 2) is carried out.

14. Method according to one of the preceding claims, **characterized in that** an addition of water (100) is carried out during malaxing (method step 4) and/or fractioning (method step 5).

15. Method according to one of the preceding claims, **characterized in that** the fractioning (method step 5) is carried out in at least one decanter, in particular in a 3-phase decanter, a 2-phase decanter and a separator and/or a 2-phase decanter.

16. Method according to one of the preceding claims, **characterized in that** the uncrushed insects are suspended in water for the purpose of killing them.

17. Method according to one of the preceding claims, **characterized in that** the killing is carried out in a heat exchanger.

18. Method according to one of the preceding claims, **characterized in that** the temperature of the water in which the insects are kept is 75-100°C when killing them.

19. Method according to one of the preceding claims, **characterized in that** a separation of the water after killing is carried out by screening.

## Revendications

1. Procédé d'obtention de produits de l'industrie alimentaire destinés à la consommation humaine et/ou animale à partir d'insectes, en particulier d'insectes au stade larvaire, **caractérisé en ce qu'**il comprend les étapes suivantes :
a) les insectes sont tués (étape 1 du procédé) par chauffage, ce pour quoi les insectes entiers sont mélangés avec de l'eau
et la température de l'eau dans laquelle les insectes sont plongés est supérieure à 60 °C pour les tuer, et
l'eau est séparée une fois que les insectes sont morts ;
b) les insectes sont broyés (étape 3 du procédé) en formant une pulpe d'insectes ;
c) le pH de la pulpe d'insectes est décalé vers une plage acide par l'ajout d'un acide (200) et la pulpe d'insectes est malaxée (étape 4 du procédé) pendant au moins 45 minutes ;
et
d) la pulpe d'insectes est fractionnée (étape 5 du procédé) par centrifugation en au moins deux fractions :
i) une phase solide (500) et
ii) une phase grasse (600),
le procédé étant exécuté sans ajout d'enzymes supplémentaires.

2. Procédé selon la revendication 1, **caractérisé en ce que** le fractionnement (fractionnement 5-2 et 5-3) de la pulpe d'insectes est exécuté en plusieurs étapes.

3. Procédé selon la revendication 1 ou 2, **caractérisé en ce que** la phase solide est soumise à un séchage (8).

4. Procédé selon l'une des revendications précédentes, **caractérisé en ce que** l'ajout d'acide (200) s'effectue moins de 10 minutes, de préférence moins de 5 minutes, après le broyage (étape 3 du procédé).

5. Procédé selon l'une des revendications précédentes, **caractérisé en ce que** le pH de la pulpe d'insectes après l'ajout de l'acide (200) est inférieur à pH 6,5, de préférence compris entre pH 2 et pH 4,5, en particulier compris entre pH 2 et pH 3.

6. Procédé selon l'une des revendications précédentes, **caractérisé en ce que** la température pendant le malaxage (étape 4 du procédé) et/ou le fractionnement (étape 5 du procédé) est d'au moins 60 °C, de préférence de 80 à 100 °C, en particulier de 85 à 95 °C.

7. Procédé selon l'une des revendications précédentes, **caractérisé en ce que** le malaxage (étape 4 du procédé) est effectué sur une durée de 55 minutes, de préférence de 60 à 130 minutes, en particulier de 90 à 120 minutes.

8. Procédé selon l'une des revendications précédentes, **caractérisé en ce que** la phase grasse (600) obtenue par le fractionnement (étape 5 du procédé) est traitée avec un séparateur de clarification.

9. Procédé selon l'une des revendications précédentes, **caractérisé en ce que** la taille de particules moyenne des fragments d'insectes dans la pulpe d'insectes après le hachage (étape 3 du procédé) est inférieure à 2 mm, en particulier comprise entre 1 et 2 mm.

10. Procédé selon l'une des revendications précédentes, **caractérisé en ce que** le hachage est réalisé par cisaillement des insectes, de préférence dans un hachoir à viande.

11. Procédé selon l'une des revendications précédentes, **caractérisé en ce que** l'acide (200) est un acide chlorhydrique dilué, de préférence un acide chlorhydrique à une concentration de 0,001 mol/l à 0,5 mol/l.

12. Procédé selon l'une des revendications précédentes, **caractérisé en ce qu'**après le fractionnement (étape 5 du procédé), au moins une des phases est neutralisée par l'ajout d'une base (300), en particulier par l'ajout d'une solution diluée de NaOH.

13. Procédé selon l'une des revendications précédentes, **caractérisé en ce qu'**après que les insectes ont été tués (étape 1 du procédé) et avant qu'ils soient hachés (étape 3 du procédé), ils sont nettoyés, en particulier par un nettoyage de surface (étape 2 du procédé).

14. Procédé selon l'une des revendications précédentes, **caractérisé en ce que** de l'eau est ajoutée (100) lors du malaxage (étape 4 du procédé) et/ou du fractionnement (étape 5 du procédé).

15. Procédé selon l'une des revendications précédentes, **caractérisé en ce que** le fractionnement (étape 5 du procédé) est effectué dans au moins un décanteur, en particulier un décanteur à trois phases, un décanteur à deux phases et un séparateur et/ou un décanteur à deux phases.

16. Procédé selon l'une des revendications précédentes, **caractérisé en ce que** les insectes non broyés sont mis en suspension dans l'eau afin de les tuer.

17. Procédé selon l'une des revendications précédentes, **caractérisé en ce que** les insectes sont tués dans un échangeur de chaleur.

18. Procédé selon l'une des revendications précédentes, **caractérisé en ce que** la température à laquelle les insectes sont introduits pour les tuer est de 75 à 100 °C.

19. Procédé selon l'une des revendications précédentes, **caractérisé en ce que** la séparation de l'eau une fois les insectes tués est effectuée par tamisage.
